# EUROPÄISCHE PATENTSCHRIFT

(11) **EP 3 663 575 B1**
(45) Veröffentlichungstag und Bekanntmachung des Hinweises auf die Patenterteilung: **12.05.2021**
(21) Anmeldenummer: 18210448.9
(22) Anmeldetag: 05.12.2018
(51) Int. Cl.: F03D 13/40, F03D 13/10, F03D 80/00

(54) **TRANSPORTSYSTEM FÜR EIN MASCHINENHAUS EINER WINDENERGIEANLAGE UND VERFAHREN ZUM TRANSPORT EINES MASCHINENHAUSES EINER WINDENERGIEANLAGE**
TRANSPORT SYSTEM FOR A NACELLE OF A WIND ENERGY PLANT AND METHOD FOR THE TRANSPORT OF A NACELLE OF A WIND ENERGY PLANT
SYSTÈME DE TRANSPORT POUR UNE NACELLE D'UNE ÉOLIENNE ET PROCÉDÉ DE TRANSPORT D'UNE NACELLE D'UNE ÉOLIENNE

(43) Veröffentlichungstag der Anmeldung: 10.06.2020
(73) Patentinhaber: Nordex Energy SE & Co. KG, 22419 Hamburg (DE)
(72) Erfinder: Jandt, Holger, 18147 Rostock (DE); Wackrow, Torsten, 18119 Rostock (DE)
(74) Vertreter: Grünbaum, Annekathrin

(56) Entgegenhaltungen:
- EP-B1- 2 038 548
- EP-B1- 2 373 520
- WO-A1-2010/069611
- DE-A1-102011 013 844

## Beschreibung

Die vorliegende Erfindung liegt auf dem Gebiet des Transports großer Bauteile einer Windenergieanlage auf der Straße, der Schiene oder auf dem Seeweg, sowie deren Lagerung und Verladung. Insbesondere betrifft die Erfindung ein Transportsystem für ein Maschinenhaus einer Windenergieanlage und ein Verfahren zum Transport eines Maschinenhauses einer Windenergieanlage.

Eine Windenergieanlage ist üblicherweise aus einzelnen Komponenten mit einer hohen Masse und sehr großen Abmessungen zusammengesetzt. Die Komponenten können beispielsweise einzelne Teile des Turms das Maschinenhaus, die Rotornabe und die Rotorblätter umfassen. Diese genannten Komponenten werden üblicherweise jede für sich vormontiert, auf ein Transportsystem verbracht und an dieser befestigt. Das Transportsystem mit dem Maschinenhaus, welches unter anderem aus dem Maschinenträger, dem Generatorträger und der Maschinenhausverkleidung besteht, wird mit handelsüblichen Trailern und Schwerlast-LKW auf der Straße, mit Güterwagen der Bahn auf dem Schienennetz oder mittels Frachtschiffen auf dem Seeweg transportiert. Dabei sind die Transportabmessungen auf den Standard-Transportfahrzeugen beschränkt, weshalb ein Transportsystem diesen Beschränkungen angepasst sein muss.

In EP 2505823 B1 wird ein Transportrahmen für eine Gondel/ Rotornabeneinheit einer Windkraftanlage offenbart, wobei die Gondel und die Rotornabe miteinander verbunden sind. Der Transportrahmen umfasst einen Hauptträger zum Abstützen des Gewichts der Gondel/Rotornabeneinheit, seitliche Stabilisierungselemente, eine Haltevorrichtung zum Befestigen der Gondel/Rotornabeneinheit und mindestens drei Befestigungspunkte für ein Hebezeug. Mit einer Hubvorrichtung wird eine bereits montierte Gondel/Rotornabeneinheit in den zwischen den seitlichen Stabilisierungselementen gebildeten Raum abgesenkt und die Haltevorrichtung an der Gondel befestigt.

Die Patentveröffentlichung WO 2011/076238 A1 offenbart eine Stützanordnung zum Entladen und Beladen von Turmsegmenten des Turmes einer Windenergieanlage und umfasst ein Stützelement und ein Adapterelement. Das Adapterelement ist an dem bogenförmigen Flanschbereich des Turmsegments befestigt. Das Stützelement ist höhenverstellbar, sodass die Stützanordnung abgestellt werden kann und das Transportmittel unter dem abgestützten Turmsegment herausfahren kann.

In EP 2038548 B1 wird eine Hubvorrichtung mit höhenverstellbaren Beinen für eine Gondel einer Windenergieanlage offenbart. Die Hubvorrichtung greift seitlich in die untere Struktur der Tragkonstruktion der Gondel ein, indem in Handhabungsöffnungen der Tragkonstruktion Hebezeuge der Hubvorrichtung einrasten. Die Hubvorrichtung ist mit Hydraulikzylindern ausgestattet, um die Gondel anzuheben, beispielsweise damit ein Transportfahrzeug beladen werden kann.

Die in EP 2373520 B1 offenbarte Lösung bezieht sich auf ein Transportsystem zum Transportieren einer Windturbinengondel. Das Transportsystem ist mit einem LKW verbunden und umfasst zwei Transporteinheiten, welche mit Rädern versehen sind, und eine Grundstruktur. Die Grundstruktur wird zwischen die Transporteinheiten gehängt und ist zum Tragen und Verbinden mit der zu transportierenden Gondel geeignet. Dazu weist die Grundstruktur eine Rahmenstruktur und ein Verbindungsmittel zur Befestigung der Gondel der Windkraftanlage auf. Die Rahmenkonstruktion ist ein quadratischer Rahmen aus I-Profilen mit einem vorstehenden Teil, der mit den Transporteinheiten mechanisch verbunden werden kann und einem zylindrischen Flansch zur Verbindung mit der Gondel. Der Rahmen kann mehrere Querträger aufweisen. Die Grundstruktur ist mit einer Art Stützmittel/Beinen versehen, welche direkt oder mit Hilfe von Verlängerungsvorrichtungen am Rahmen befestigt werden, um die Grundstruktur vertikal abzusenken oder anzuheben. Die Grundstruktur wird bei der Herstellung der Gondel an der Gondel befestigt und verbleibt an der Gondel bei der gesamten Montage und der Lagerung der fertig montierten Gondel.

### Darstellung der Erfindung

Der Erfindung liegt die Aufgabe zugrunde, ein Transportsystem für ein Maschinenhaus einer Windenergieanlage zu entwickeln, welches mit einfachen Mitteln den Transport des Maschinenhauses sowohl in der Produktion als auch zum Bauplatz ermöglicht, ohne dass das Transportsystem gewechselt werden muss.

Die Schwierigkeit bei der Entwicklung eines Transportsystems besteht darin, eine Komponente mit hoher Masse und größtmöglichen Abmessungen in beschränkten Transportabmessungen auf Standard-Transportfahrzeugen zu transportieren. Weiterhin soll der gesamte Lebenszyklus der Komponente von der Produktion über Zwischenlagerung, Straßentransport, Schienentransport, Seetransport, Errichtung und Rückbau mit Rückführung, kostenoptimiert durchgeführt werden können. Auch der Umlauf des Transportsystems zur Produktionsstätte und von der Baustelle zurück soll durch die Erfindung vereinfacht werden.

Die Lösung der Aufgabe erfolgt mit den Merkmalen des Hauptanspruchs, wobei die Unteransprüche weitere Ausgestaltungen beschreiben.

Erfindungsgemäß wird ein Transportsystem für ein Maschinenhaus einer Windenergieanlage beansprucht. Das Maschinenhaus umfasst im Sinne der Erfindung neben anderen, für die Erfindung nicht relevanten Komponenten einen Generatorträger und einen Maschinenträger als Tragstruktur und/oder eine Maschinenhausverkleidung. Mit dem Begriff "Maschinenhaus" sind üblicherweise alle Komponenten umfasst, die sich oberhalb der Schnittstelle zum Turmkopf befinden mit Ausnahme des Windrotors (Rotornabe, Rotorblätter). Dazu gehören außer den bereits genannten auch das Tragwerk, der Triebstrang mit der Schnellen Welle, dem Getriebe, der Langsamen Welle und dem Generator, sämtliche Elektrik-, Mechanik- und Hydraulik-Komponenten, die im Innern der Maschinenhausverkleidung oder außen an der Maschinenhausverkleidung angeordnet sind, welche hier außer Betracht bleiben sollen. Das Transportsystem umfasst wenigstens zwei Transporteinheiten, welche nicht miteinander verbunden sind sondern jede für sich eine Einheit bilden. Eine hintere Transporteinheit ist mit dem Generatorträger verbindbar und eine vordere Transporteinheit ist mit dem Maschinenträger verbindbar. Die hintere Transporteinheit umfasst erfindungsgemäß ein hinteres Hohlprofil mit zwei auf dem Hohlprofil fest, aber lösbar angeordneten, identischen, aber seitenverkehrten hinteren Stützeinheiten, welche mit dem Generatorträger verbindbar sind, und die vordere Transporteinheit umfasst ein vorderes Hohlprofil mit zwei auf dem Hohlprofil fest, aber lösbar angeordneten, identischen, aber seitenverkehrten vorderen Stützeinheiten, welche mit dem Maschinenträger verbindbar sind.

Die vorderen und hinteren Transporteinheiten sind in ihrem Aufbau dem Maschinenträger bzw. dem Generatorträger angepasst. Die hintere Transporteinheit und die vordere Transporteinheit weisen in einer wesentlichen Ausführungsform Führungsdorne auf, welche mit Öffnungen/Bohrungen im Generatorträger und im Maschinenträger korrespondieren.

In einer wesentlichen Ausführungsform besteht jede hintere Stützeinheit im Wesentlichen aus einem Transportfuß und einer Transportstütze, wobei ein das Hohlprofil aufnehmendes Basisteil des Transportfußes mit Hilfe von Verbindungsmitteln auf dem Hohlprofil lösbar fixiert oder fixierbar ist. Jede hintere Transportstütze ist einerseits mit dem Basisteil des Transportfußes verbunden und andererseits ist an ihrem oberen Ende ein Abschlussblech lösbar befestigt.

In einer weiteren wesentlichen Ausführungsform besteht jede vordere Stützeinheit im Wesentlichen aus einem Transportfuß und einer vorderen Transportstütze, wobei ein das Hohlprofil aufnehmendes Basisteil des Transportfußes mit Hilfe von Verbindungsmitteln auf dem Hohlprofil lösbar fixiert oder fixierbar ist. Jede vordere Transportstütze ist einerseits mit dem Basisteil des Transportfußes verbunden und andererseits an ihrem oberen Ende mit Bohrungen versehen, welche einer Fixierung des Maschinenträgers mittels Verbindungsmittel dienen. Mittig auf dem Basisteil ist ein Führungsdorn angeordnet.

Das erfindungsgemäße Verfahren zum Transport eines Maschinenhauses einer Windenergieanlage, welche einen Generatorträger und einen Maschinenträger und/oder eine Maschinenhausverkleidung umfasst, erfolgt unter Verwendung des erfindungsgemäßen Transportsystems. Dazu wird oder ist der Generatorträger auf eine hintere Transporteinheit des Transportsystems positioniert und mit dieser verbunden, wobei Öffnungen auf der Unterseite des Generatorträgers mit der Transporteinheit korrespondieren, und der Maschinenträger wird oder ist auf eine vordere Transporteinheit des Transportsystems positioniert und mit dieser verbunden, wobei Bohrungen auf der Unterseite des Maschinenträgers mit der Transporteinheit korrespondieren. Das Aufsetzen des Maschinenträgers und des Generatorträgers erfolgt einzeln und gesondert oder als zusammengesetzte Einheit mit dem Generatorträger und dem Maschinenträger und/oder der Maschinenhausverkleidung. Das Transportsystem und das Maschinenhaus bleiben von der Produktion bis zum Bauplatz verbunden.

In einer wesentlichen Ausführungsform ist das Verfahren dadurch gekennzeichnet, dass
- das Transportsystem, umfassend eine hintere Transporteinheit und eine vordere Transporteinheit bereitgestellt wird oder ist;
- der Generatorträger auf der hinteren Transporteinheit über mehrere Führungsdorne positioniert wird und durch zwei Abschlussbleche einer hinteren Stützeinheit der Transporteinheit fixiert wird;
- der Maschinenträger auf der vorderen Transporteinheit positioniert wird und über mehrere Verbindungsmittel und zwei Führungsdorne einer vorderen Stützeinheit der Transporteinheit fixiert wird. Alternativ wird der Maschinenträger und der Generatorträger und/oder die Maschinenhausverkleidung als eine zusammengesetzte Einheit auf die bereitgestellte hintere Transporteinheit und vordere Transporteinheit positioniert und durch Abschlussbleche, bevorzugt zwei, der hinteren Stützeinheit der Transporteinheit und über mehrere Verbindungsmittel und Führungsdorne, bevorzugt zwei, der vorderen Stützeinheit der Transporteinheit fixiert.

In einer weiteren wesentlichen Ausführungsform werden die Transporteinheiten, die hintere und die vordere, durch die Maschinenhausverkleidung hindurch mit dem Generatorträger und dem Maschinenträger verbunden.

Das Transportsystem ermöglicht den Transport des Maschinenhauses über den gesamten Lebenszyklus. Weiterhin ist es möglich den Transport mit Standard-LKW, Güterwagen der Bahn und Frachtschiffen mit einer einfachen Ladungssicherung vorzunehmen.

### Ausführung der Erfindung

Die Erfindung wird anhand eines Ausführungsbeispiels erläutert. Hierzu zeigen
- Figur 1: ein erfindungsgemäßes Transportsystem,
- Figur 2: ein Detail des Transportsystems,
- Figur 3: eine Stützeinheit einer hinteren Transporteinheit,
- Figur 4: Details einer Schnittdarstellung der Anbindung einer hinteren Stützeinheit an das Maschinenhaus,
- Figur 5: Stützeinheit einer vorderen Transporteinheit,
- Figur 6: hintere Transporteinheit in einer perspektivischen Darstellung,
- Figur 7: vordere Transporteinheit in einer perspektivischen Darstellung,
- Figur 8: das Transportsystem mit einem transportbereiten Maschinenhaus in einer perspektivischen Darstellung,
- Figur 8-A, 8-B: Detailansichten zu Figur 8.

Das Transportsystem 1 dient zum sicheren Straßen-, Schienen- und Seetransport eines Maschinenhauses. Erfindungsgemäß wird beispielhaft das Transportsystem 1 beschrieben, das den Transport des Maschinenhauses, unter anderem bestehend aus den Großkomponenten Maschinenträger MT, Generatorträger GT und Maschinenhausverkleidung 5, bei einer Höhenbeschränkung von 4m über den gesamten Lebenszyklus optimal realisiert. Das Transportsystem 1 besteht aus zwei hinteren Transporteinheiten 2 und zwei vorderen Transporteinheiten 3 die jeweils über ein Hohlprofil 4 (Querprofil) miteinander verbunden sind.

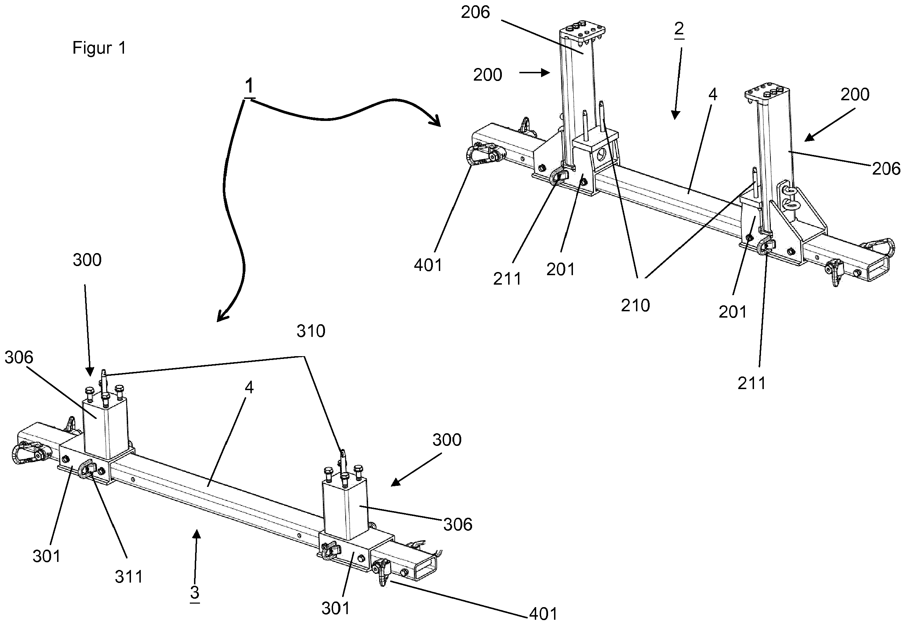

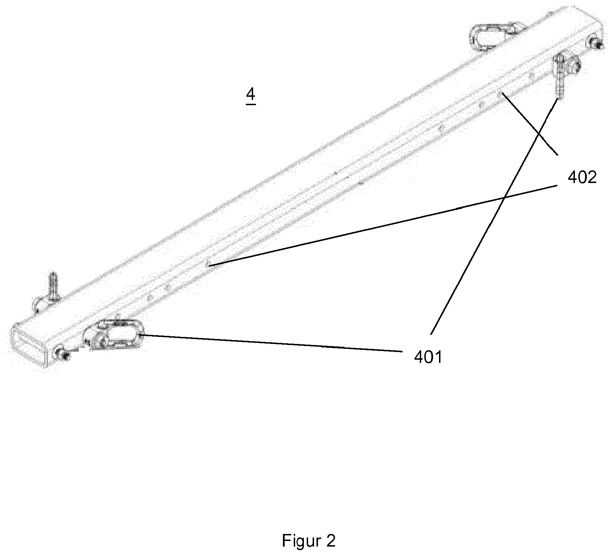

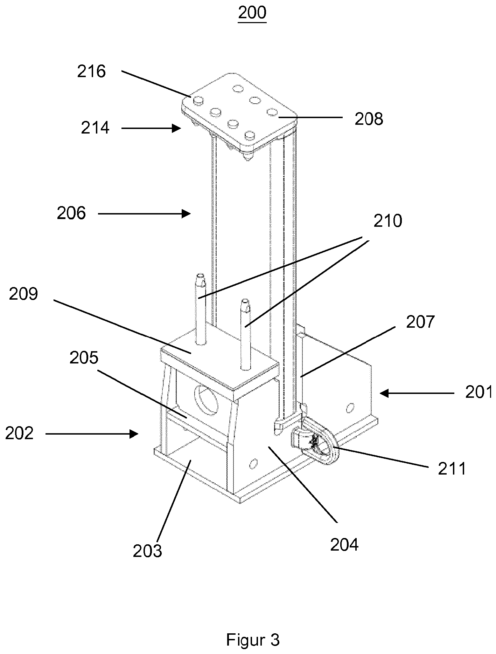

In Figur 1 wird ein erfindungsgemäßes Transportsystem 1 gezeigt, welches, vollständig zusammengebaut, bereit zur Aufnahme eines Maschinenhauses ist. Das Transportsystem 1 besteht aus einer hinteren Transporteinheit 2, welche der Aufnahme des Generatorträgers GT dient, und einer vorderen Transporteinheit 3, welche der Aufnahme des Maschinenträgers MT dient. Die Transporteinheiten 2 und 3 sind nicht miteinander verbunden und bilden jede für sich eine Einheit. Dennoch sind diejenigen Teile der Transporteinheiten 2 und 3 gleich, welche mit den gleichen Bezugszeichen versehen sind. So besteht jede Transporteinheit 2 und 3 aus einem langgestreckten Hohlprofil 4 (siehe auch Figur 2), auf dem die weiteren Komponenten befestigt sind. Auf dem Hohlprofil 4 der hinteren Transporteinheit 2 sind zwei identische, aber seitenverkehrte Stützeinheiten 200 fest, aber lösbar angeordnet. Eine Stützeinheit 200 besteht im Wesentlichen aus einem Transportfuß 201 und einer Transportstütze 206. Auf dem Hohlprofil 4 der vorderen Transporteinheit 3, welches die gleichen Abmessungen wie das vorher beschriebene hat, sind zwei identische, aber seitenverkehrte Stützeinheiten 300 fest, aber lösbar angeordnet. Eine Stützeinheit 300 besteht im Wesentlichen aus einem Transportfuß 301 und einer Transportstütze 306. Die Stützeinheiten 200, 300 werden in den Figuren 3 bis 5 näher betrachtet.

Figur 2 zeigt das Hohlprofil 4 für eine hintere oder eine vordere Transporteinheit 2, 3, welches in diesem Ausführungsbeispiel eine Länge von 4000mm, eine Breite von 260mm und eine Höhe von 140mm hat, in einer perspektivischen Darstellung. An den äußeren Enden können seitlich Transportösen 401 mit dem Hohlprofil 4 lösbar verbunden sein. Die Transportösen 401 dienen der Befestigung der Transporteinheiten 2, 3 auf dem hier nicht dargestellten Transportfahrzeug. Weiterhin sind seitliche Bohrungen 402 für die Befestigung der Transportfüße 201, 301 der Stützeinheiten 200, 300 vorgesehen.

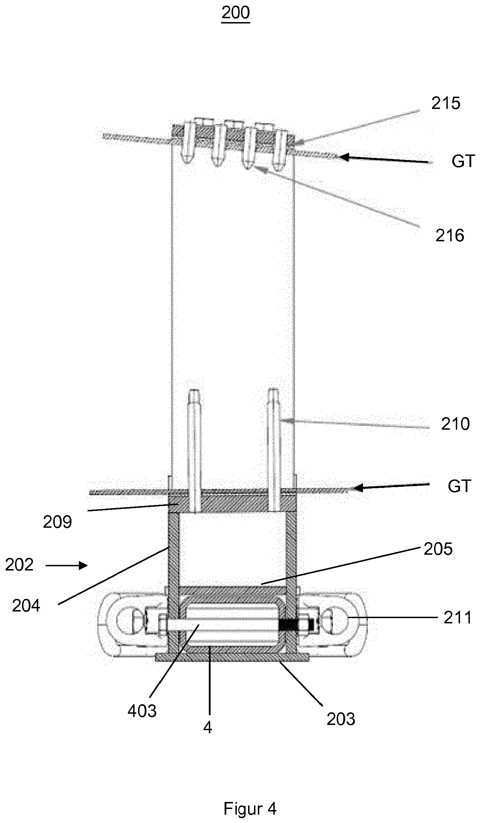

In Figur 3 ist in einer perspektivischen Darstellung eine Stützeinheit 200 einer hinteren Transporteinheit 2 und in Figur 4 in einer Schnittdarstellung Details der Anbindung einer Stützeinheit 200 an das Maschinenhaus zu sehen. Es werden zwei Stützeinheiten 200 benötigt, welche sich auf dem Hohlprofil 4 gegenüberliegend und einander zugewandt angeordnet sind. Die Höhe der Stützeinheiten 200 entspricht der Höhe des Generatorträgers GT an der zu befestigenden Stelle und ist entsprechend anpassbar. Eine Stützeinheit 200 besteht im Wesentlichen aus einem Transportfuß 201 und einer Transportstütze 206. Der Transportfuß 201 besteht aus einem Basisteil 202 mit einer unteren Platte 203, auf welcher zwei seitliche Abdeckplatten 204 angeordnet sind, und einer oberen Platte 205, welche zwischen die seitlichen Abdeckplatten 204 eingefügt ist. In den so entstehenden Hohlraum zwischen der unteren Platte 203, den seitlichen Abdeckplatten 204 und der oberen Platte 205 wird das Hohlprofil 4 aufgenommen bzw. geschoben und dort mit Hilfe von Verbindungsmitteln 403 fixiert. Mit dem Basisteil 202 ist seitlich je eine Transportöse 211 verbunden. Die seitlichen Abdeckplatten 204 ragen über die Höhe des Hohlprofils 4 hinaus, sodass sie der Versteifung der Transportstütze 206 dienen können, welche in einen Ausschnitt 207 der seitlichen Abdeckplatten 204 eingefügt und dort fixiert ist. Die Transportstütze 206 ist an ihrem oberen Ende 214 mit einem Abschlussblech 208 versehen, welches mit Hilfe von Verbindungsmitteln 216 lösbar befestigt ist. Dazu sind in die Transportstütze 206 auf ihrem oberen Ende 214 mehrere Bohrungen 215 eingebracht, welche mit dem Abschlussblech 208 korrespondieren. In Figur 4 sind Details dieser Anordnungen in einer Schnittzeichnung durch eine der hinteren Stützeinheiten 200 zu sehen.

Die Lage der Stützeinheiten 200 und damit der Transportstütze 206 auf dem Hohlprofil 4 korrespondiert mit Öffnungen in der Maschinenhausverkleidung 5 und ist veränderbar. Des Weiteren sind die beiden seitlichen Abdeckplatten 204 vor der Transportstütze 206 durch eine Platte 209 fest verbunden und auf dem Hohlprofil 4 zueinander zeigend angeordnet. In die Platte 209 des rechten und des linken Transportfußes 201 sind nach oben gerichtet jeweils zwei Führungsdorne 210 eingebracht. Auf die Führungsdorne 210 wird später der Generatorträger GT gesetzt, wodurch ein Verkippen beim Aufsetzen und Abnehmen des Generatorträgers GT oder des Maschinenhauses von dem Transportsystem 1 verhindert wird. Ebenso sind die Abschlussbleche 208 der beiden Stützeinheiten 200 einander zugewandt nach innen gerichtet. Die Abschlussbleche 208 werden nach dem Einfügen des Generatorträgers GT in das Transportsystem 1 aufgesetzt und verschraubt, sodass eine Sicherung des Generatorträgers GT nach oben erfolgen kann.

In Figur 4 sind Details der Anbindung einer hinteren Stützeinheit 200 an das Maschinenhaus zu sehen. Die Transportstütze 206 ist mit der unteren Platte 203 fest verbunden. Die Führungsdorne 210 sind mit dem Generatorträger GT verbunden. Weiterhin ist das Abschlussblech 208 zu sehen. Das Abschlussblech 208 ist am oberen Ende 214 der Transportstütze 206 mit den Verbindungsmitteln 216 befestigt und sichert so den Generatorträger GT. Außerdem ist in Figur 4 zu sehen, dass das Hohlprofil 4 in dem Basisteil 202 durch Verbindungsmittel 403 gesichert ist.

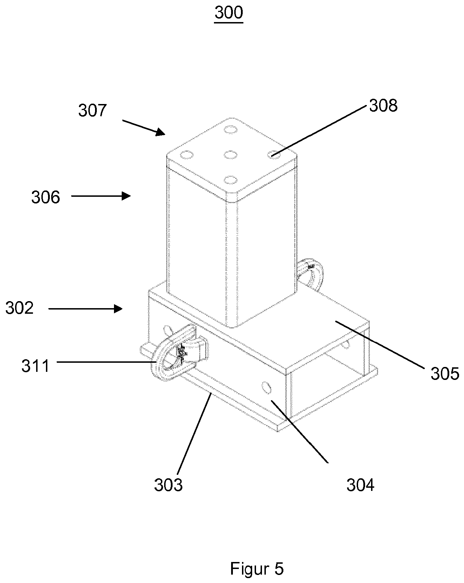

In Figur 5 ist eine perspektivische Darstellung einer Stützeinheit 300 einer vorderen Transporteinheit 3 zu sehen. Es werden zwei Stützeinheiten 300 benötigt, welche sich gegenüberliegend und einander zugewandt, auf dem Hohlprofil 4 angeordnet sind. Die Höhe der Stützeinheiten 300 ist den baulichen Gegebenheiten des Maschinenträgers MT am Befestigungspunkt angepasst. Eine Stützeinheit 300 besteht im Wesentlichen aus einem Transportfuß 301 und einer Transportstütze 306. Der Transportfuß 301 besteht aus einem Basisteil 302 mit einer unteren Platte 303, auf welcher zwei seitliche Abdeckplatten 304 angeordnet sind, und einer oberen Platte 305, welche auf den seitlichen Abdeckplatten 304 angeordnet und mit diesen fest verbunden ist. In den so entstehenden Hohlraum zwischen der unteren Platte 303, den seitlichen Abdeckplatten 304 und der oberen Platte 305 wird das Hohlprofil 4 aufgenommen bzw. geschoben und dort mit Hilfe von Verbindungsmitteln 403 fixiert. Mit dem Basisteil 302 ist seitlich je eine Transportöse 311 verbunden. Auf dem Basisteil 302 ist die Transportstütze 306 fest angeordnet. Die Transportstütze 306 korrespondiert mit Öffnungen in der Maschinenhausverkleidung 5 und dem Maschinenträger MT. Das obere Ende 307 der geschlossenen Transportstütze 306 ist mit mehreren Bohrungen 308 versehen, wobei eine mittlere Bohrung 308 einen Führungsdorn 310 aufnimmt. Der Führungsdorn 310 dient der Führung des Maschinenträgers MT beim Aufsetzen auf das Transportsystem 1. Die anderen Bohrungen 308 dienen der Fixierung des Maschinenträgers MT mittels Verbindungsmittel 309.

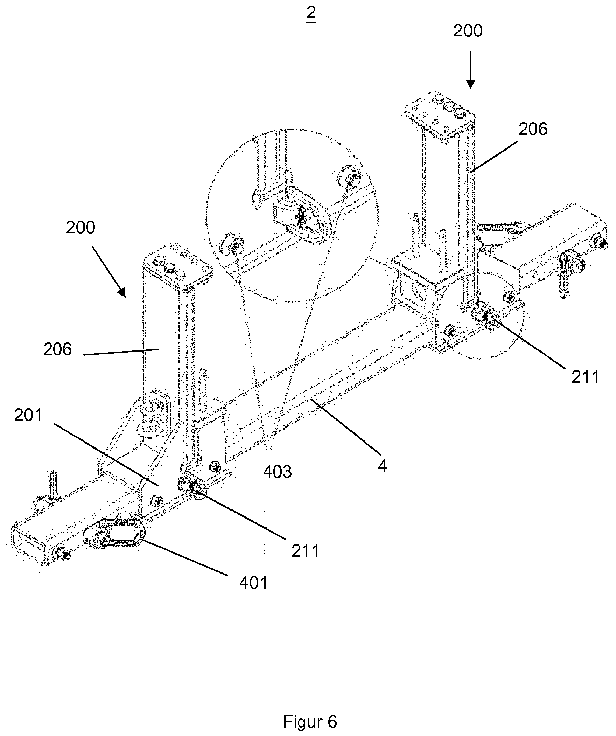

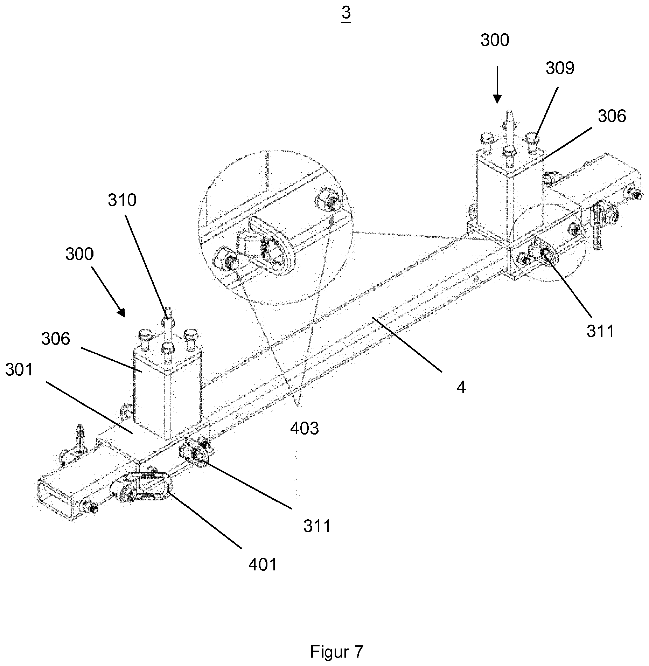

Die Figur 6 zeigt die hintere Transporteinheit 2 und die Figur 7 zeigt die vordere Transporteinheit 3 jeweils in einer perspektivischen Darstellung. In den Figuren 6 und 7 ist deutlich zu erkennen, wie die Stützeinheiten 200, 300 in den seitlichen Bohrungen 402 der Hohlprofile 4 mit Hilfe der Verbindungsmittel 403 befestigt sind. In dem vorliegenden Ausführungsbeispiel handelt es sich bei den Verbindungsmitteln 403 um Sechskantschrauben, es sind aber auch andere Verbindungsmittel 403 vorstellbar, wie beispielsweise Sicherungssplinte oder Sicherungsbolzen.

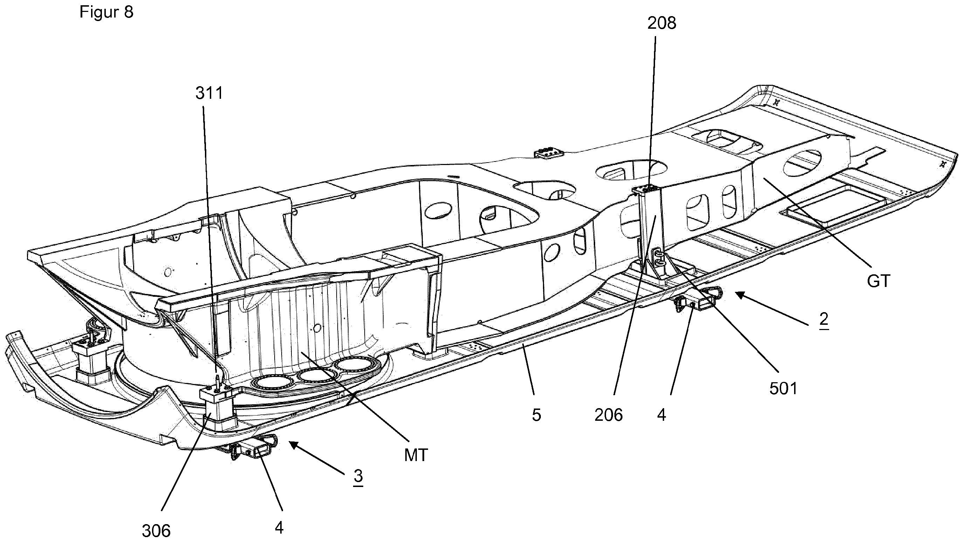

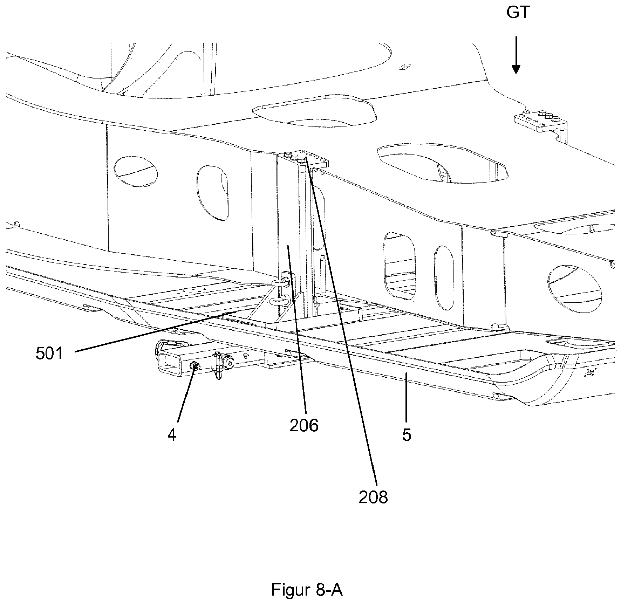

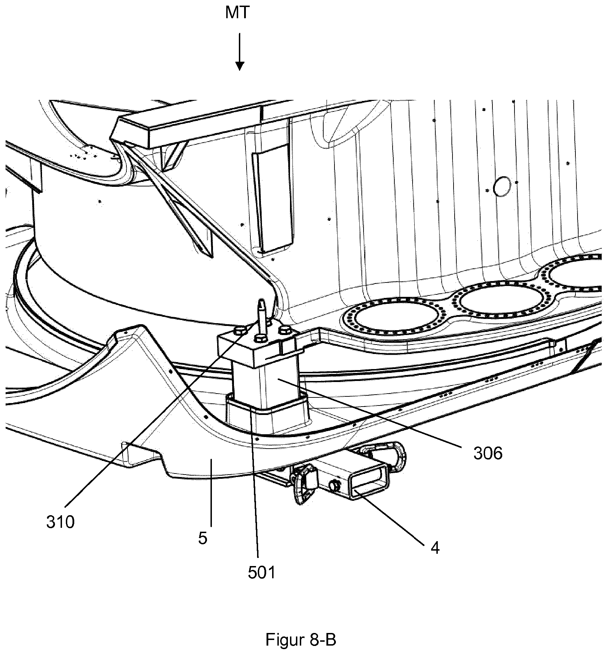

In Figur 8 wird das Transportsystem 1 mit einem Teil des zu transportierenden Maschinenhauses gezeigt, in Höhe des Maschinenträgers MT ist die Zeichnung angeschnitten. Die hintere Transporteinheit 2 und die vordere Transporteinheit 3 ragen durch entsprechende Öffnungen 501 in der Maschinenhausverkleidung 5 nach oben. Der Generatorträger GT liegt auf den Platten 209 des rechten und des linken Transportfußes 201 auf und die nach oben gerichteten Führungsdorne 210 werden durch vorhandene Öffnungen im Generatorträger GT aufgenommen. Die Transportstützen 206 der hinteren Transporteinheit 2 sind außerhalb des Generatorträgers GT so an diesem vorbeigeführt, dass durch das Abschlussblech 208 der Generatorträger GT fixiert werden kann. Der Maschinenträger MT liegt auf der vorderen Transporteinheit 3 auf. Dabei sind die Transportstützen 306 durch Öffnungen 501 in der Maschinenhausverkleidung 5 hindurch geführt. Der Maschinenträger MT liegt auf den oberen Enden 307 der Stützeinheiten 300 auf und die nach oben gerichtet Führungsdorne 310 werden durch vorhandene Bohrungen im Maschinenträger MT aufgenommen. Der Maschinenträger MT wird mittels der Verbindungsmittel 309 auf den oberen Enden 307 der Stützeinheiten 300 lösbar fixiert. Die Figuren 8-A und 8-B zeigen Detailansichten zu Figur 8.

Das Transportsystem 1 wird in der Produktion bereitgestellt. Die Transporteinheiten 2 und 3 können wahlweise vor oder nach dem Zusammenbau von Maschinenträger MT und Generatorträger GT mit diesen verbunden werden. Die hintere Transporteinheit 2 wird über vier Führungsdorne 210 und zwei Abschlussbleche 208 mit dem Generatorträger GT sicher verbunden. Die vordere Transporteinheit 3 wird über acht Verbindungsmittel 309, beispielsweise Schrauben, und zwei Führungsdorne 310 mit dem Maschinenträger MT verbunden. Werden die Transporteinheiten 2 und 3 nach dem Zusammenbau von Maschinenträger MT und Generatorträger GT angeschlagen, werden die Hohlprofile 4 nachträglich in die Stützeinheiten 200, 300 eingefügt und befestigt. In der Produktion läuft das Maschinenhaus mit dem Transportsystem 1 über die gesamte Fertigungslinie bis hin zum Abtransport.

Für den Abtransport des Maschinenhauses wird das Maschinenhaus mit dem Transportsystem 1 mit Hilfe von Hebemitteln, welche an dem Maschinenhaus angeschlagen werden, auf die Transportmittel, beispielsweise ein LKW, ein Güterwagen der Bahn oder ein Schiff, gehoben und dort gesichert.

Die Ladungssicherung während eines Straßen- oder Schienentransports wird mittels handelsüblicher Zurrketten an dem Transportsystem 1 vorgenommen. Das Maschinenhaus wird an dem Transportsystem 1 auf einen für die Last zugelassenen Trailer oder Güterwagen abgesetzt. Die Ladung kann mit Antirutschmatten an den Kontaktflächen unterstützt werden und wird mit gespannten Ketten in ihrer Lage gesichert.

Bei einem Seetransport wird das Maschinenhaus direkt mit dem Transportsystem 1 auf das Schiffsdeck in einen für die Last zugelassenen Bereich verladen. Die Ladungssicherung gegen Rutschen wird dabei über mit dem Schiffsdeck verschweißten Stopperblechen realisiert.

Bei der Errichtung der Windenergieanlage wird die Verbindung des Transportsystems 1 vom Maschinenhaus gelöst. Die Führungsdorne 210, 310 sichern das Maschinenhaus und verhindern beim Abheben ein Beschädigen der GFK-Maschinenhausverkleidung.

Der Transport des Transportsystems 1 zur Produktion und die Lagerung des Transportsystems 1 kann mit handelsüblichen Planen-LKW durchgeführt werden. Für den Rücktransport werden die einzelnen Komponenten der Transporteinheiten 2, 3, wie Hohlprofil 4, Stützeinheiten 200, 300 oder die zusammengebauten Transporteinheiten 2, 3, mit Antirutschmatten und Zurrmitteln so gesichert, dass ein Verrutschen beim Bremsen, bei Kurvenfahrt, beim Beschleunigen usw. nicht möglich ist.

Die Transporteinheiten 2, 3 können in den einzelnen Komponenten Hohlprofil 4, Stützeinheiten 200, 300 oder als Baugruppe gehoben bzw. transportiert und gelagert werden. Dazu können die beschriebenen Transportösen 211, 311, 401 benutzt werden. Außerdem können zusätzlich Ringschrauben in die Bohrungen 308, 214 der Transportstützen 206, 306 eingeschraubt werden. Diese Ringschrauben werden bei Nichtgebrauch beispielsweise an der hinteren Transporteinheit 2 deponiert.

Für einen Rückbau der Windenergieanlage wird das Transportsystem 1 auf der Kranstellfläche ausgerichtet und das Maschinenhaus wird über die Führungsdorne 210, 310 abgesetzt. Anschließend wird das Maschinenhaus mit der hinteren Transporteinheit 2 über die zwei Abschlussbleche 208 am Generatorträger GT gesichert. Die vordere Transporteinheit 3 wird über die Verbindungsmittel 309 mit dem Maschinenträger MT verbunden und gesichert.

### Bezugszeichen

- GT: Generatorträger
- MT: Maschinenträger

- 1: Transportsystem

- 2: hintere Transporteinheit
- 200: Stützeinheit
- 201: Transportfuß der Stützeinheit 200
- 202: Basisteil Transportfüße 201
- 203: untere Platte
- 204: seitliche Abdeckplatte
- 205: obere Platte
- 206: Transportstütze
- 207: Ausschnitt in der seitlichen Abdeckplatte 204
- 208: Abschlussblech
- 209: Platte
- 210: Führungsdorn
- 211: Transportöse
- 212: Öffnungen Generatorträger GT
- 214: oberes Ende der Transportstütze 206
- 215: Bohrungen
- 216: Verbindungsmittel

- 3: vordere Transporteinheit
- 300: Stützeinheit
- 301: Transportfuß der Stützeinheit 300
- 302: Basisteil Transportfüße 301
- 303: untere Platte
- 304: seitliche Abdeckplatte
- 305: obere Platte
- 306: Transportstütze
- 307: obere Seite der Transportstütze 306
- 308: Bohrung
- 309: Verbindungsmittel
- 310: Führungsdorn
- 311: Transportöse

- 4: Hohlprofil
- 401: Transportöse
- 402: seitliche Bohrung
- 403: Verbindungsmittel

- 5: Maschinenhausverkleidung
- 501: Öffnungen in der Maschinenhausverkleidung 5

## Patentansprüche

1. Transportsystem (1) für ein Maschinenhaus einer Windenergieanlage,
wobei das Maschinenhaus einen Generatorträger (GT) und einen Maschinenträger (MT) und/oder eine Maschinenhausverkleidung (5) umfasst, und das Transportsystem (1) wenigstens zwei Transporteinheiten (2, 3) umfasst, welche nicht miteinander verbunden sind sondern jede für sich eine Einheit bilden,
wobei eine hintere Transporteinheit (2) mit dem Generatorträger (GT) verbindbar ist,
und eine vordere Transporteinheit (3) mit dem Maschinenträger (MT) verbindbar ist,
**dadurch gekennzeichnet, dass**
die hintere Transporteinheit (2) ein hinteres Hohlprofil (4) mit zwei auf dem Hohlprofil (4) fest, aber lösbar angeordneten, identischen, aber seitenverkehrten hinteren Stützeinheiten (200) umfasst, welche mit dem Generatorträger (GT) verbindbar sind, und die vordere Transporteinheit (3) ein vorderes Hohlprofil (4) mit zwei auf dem Hohlprofil (4) fest, aber lösbar angeordneten, identischen, aber seitenverkehrten vorderen Stützeinheiten (300) umfasst, welche mit dem Maschinenträger (MT) verbindbar sind.

2. Transportsystem (1) nach Anspruch 1 **dadurch gekennzeichnet, dass** die hintere Transporteinheit (2) und die vordere Transporteinheit (3) Führungsdorne (210, 310) aufweisen, welche mit Öffnungen/Bohrungen im Generatorträger (GT) und im Maschinenträger (MT) korrespondieren.

3. Transportsystem (1) nach Anspruch 1 oder 2 **dadurch gekennzeichnet, dass** jede hintere Stützeinheit (200) im Wesentlichen aus einem Transportfuß (201) und einer hinteren Transportstütze (206) besteht, wobei ein das Hohlprofil (4) aufnehmendes Basisteil (202) des Transportfußes (201) mit Hilfe von Verbindungsmitteln auf dem Hohlprofil (4) lösbar fixiert oder fixierbar ist, und dass jede hintere Transportstütze (206) einerseits mit dem Basisteil (202) des Transportfußes (201) verbunden ist und andererseits an ihrem oberen Ende (214) ein Abschlussblech (208) lösbar befestigt ist.

4. Transportsystem (1) nach Anspruch 1 oder 2 **dadurch gekennzeichnet, dass** jede vordere Stützeinheit (300) im Wesentlichen aus einem Transportfuß (301) und einer vorderen Transportstütze (306) besteht, wobei ein das Hohlprofil (4) aufnehmende Basisteil (302) des Transportfußes (301) mit Hilfe von Verbindungsmitteln auf dem Hohlprofil (4) lösbar fixiert oder fixierbar ist, und dass jede vordere Transportstütze (306) einerseits mit dem Basisteil (302) des Transportfußes (301) verbunden ist und andererseits an ihrem oberen Ende (307) Bohrungen (308) aufweist, welche einer Fixierung des Maschinenträgers (MT) mittels Verbindungsmittel (309) dienen, wobei mittig auf dem Basisteil (302) ein Führungsdorn (310) angeordnet ist.

5. Verfahren zum Transport eines Maschinenhauses einer Windenergieanlage, welche einen Generatorträger (GT) und einen Maschinenträger (MT) und/oder eine Maschinenhausverkleidung (5) umfasst, unter Verwendung eines Transportsystems (1) nach den Ansprüchen 1 bis 4 **dadurch gekennzeichnet, dass**,
der Generatorträger (GT) auf eine hintere Transporteinheit (2) des Transportsystems (1) positioniert wird oder ist und mit dieser verbunden wird oder ist, wobei Öffnungen auf der Unterseite des Generatorträgers (GT) mit der Transporteinheit (2) korrespondieren, und
der Maschinenträger (MT) auf eine vordere Transporteinheit (3) des Transportsystems (1) positioniert wird oder ist und mit dieser verbunden wird oder ist, wobei Bohrungen auf der Unterseite des Maschinenträgers (M)T mit der Transporteinheit (3) korrespondieren, und
dass das Aufsetzen des Maschinenträgers (MT) und des Generatorträgers (GT) einzeln oder als zusammengesetzte Einheit mit dem Generatorträger (GT) und dem Maschinenträger (MT) und/oder der Maschinenhausverkleidung (5) erfolgt,
wobei das Transportsystem (1) und das Maschinenhaus von der Produktion bis zum Bauplatz verbunden bleiben.

6. Verfahren nach Anspruch 5 **dadurch gekennzeichnet, dass**
- das Transportsystems (1), umfassend eine hintere Transporteinheit (2) und eine vordere Transporteinheit (3) bereitgestellt wird oder ist;
- der Generatorträger (GT) auf der hinteren Transporteinheit (2) über mehrere Führungsdorne (210) positioniert wird und durch Abschlussbleche (208) einer hinteren Stützeinheit (200) der Transporteinheit (2) fixiert wird;
- der Maschinenträger (MT) auf der vorderen Transporteinheit (3) positioniert wird und über mehrere Verbindungsmittel (309) und Führungsdorne (310) einer vorderen Stützeinheit (300) der Transporteinheit (3) fixiert wird,
oder dass
der Maschinenträger (MT) und der Generatorträger (GT) und/oder die Maschinenhausverkleidung (5) als eine zusammengesetzte Einheit auf die bereitgestellte hintere Transporteinheit (2) und vordere Transporteinheit (3) positioniert wird und durch Abschlussbleche (208) der hinteren Stützeinheit (200) der Transporteinheit (2) und über mehrere Verbindungsmittel (309) und Führungsdorne (310) der vorderen Stützeinheit (300) der Transporteinheit (3) fixiert wird.

7. Verfahren nach Anspruch 5 oder 6 **dadurch gekennzeichnet, dass** die Transporteinheiten (2, 3) durch die Maschinenhausverkleidung (5) hindurch mit dem Generatorträger (GT) und dem Maschinenträger (MT) verbunden werden.

## Claims

1. Transport system (1) for a nacelle of a wind turbine, wherein the nacelle comprises a generator frame (GT) and a machine frame (MT) and/or a nacelle cover (5), and the transport system (1) comprises at least two transport units (2, 3), which are not connected to one another but in each case form a unit in their own right, wherein a rear transport unit (2) is connectable to the generator frame (GT),
and a front transport unit (3) is connectable to the machine frame (MT),
**characterized in that**
the rear transport unit (2) comprises a rear hollow profile (4) with two identical but laterally inverted rear supporting units (200) which are arranged in a fixed but detachable manner on the hollow profile (4) and which are connectable to the generator frame (GT), and the front transport unit (3) comprises a front hollow profile (4) with two identical but laterally inverted front supporting units (300) which are arranged in a fixed but detachable manner on the hollow profile (4) and which are connectable to the machine frame (MT).

2. Transport system (1) according to Claim 1,
**characterized in that** the rear transport unit (2) and the front transport unit (3) have guide pins (210, 310) which correspond to openings/bores in the generator frame (GT) and in the machine frame (MT).

3. Transport system (1) according to Claim 1 or 2,
**characterized in that** each rear supporting unit (200) consists substantially of a transport foot (201) and a rear transport support (206), wherein a base part (202), receiving the hollow profile (4), of the transport foot (201) is detachably fixed or fixable to the hollow profile (4) with the aid of connecting means, and **in that**, on the one hand, each rear transport support (206) is connected to the base part (202) of the transport foot (201), and, on the other hand, a closure plate (208) is detachably fastened to the upper end (214) of said rear transport support.

4. Transport system (1) according to Claim 1 or 2,
**characterized in that** each front supporting unit (300) consists substantially of a transport foot (301) and a front transport support (306), wherein a base part (302), receiving the hollow profile (4), of the transport foot (301) is detachably fixed or fixable to the hollow profile (4) with the aid of connecting means, and **in that** each front transport support (306), on the one hand, is connected to the base part (302) of the transport foot (301) and, on the other hand, has at its upper end (307) bores (308) which serve for fixing of the machine frame (MT) by means of connecting means (309), wherein a guide pin (310) is arranged centrally on the base part (302).

5. Method for transporting a nacelle of a wind turbine, which nacelle comprises a generator frame (GT) and a machine frame (MT) and/or a nacelle cover (5), using a transport system (1) according to Claims 1 to 4,
**characterized in that**
the generator frame (GT) is or has been positioned onto a rear transport unit (2) of the transport system (1) and is or has been connected to said rear transport unit, wherein openings on the bottom side of the generator frame (GT) correspond to the transport unit (2), and the machine frame (MT) is or has been positioned onto a front transport unit (3) of the transport system (1) and is or has been connected to said front transport unit, wherein bores on the bottom side of the machine frame (MT) correspond to the transport unit (3), and
**in that** the mounting of the machine frame (MT) and the generator frame (GT) is realized individually or as a composite unit with the generator frame (GT) and the machine frame (MT) and/or the nacelle cover (5), wherein the transport system (1) and the nacelle remain connected from the point of production up to the construction site.

6. Method according to Claim 5, **characterized in that**
- the transport system (1), comprising a rear transport unit (2) and a front transport unit (3), is or has been provided;
- the generator frame (GT) is positioned onto the rear transport unit (2) via a plurality of guide pins (210) and is fixed by closure plates (208) of a rear supporting unit (200) of the transport unit (2);
- the machine frame (MT) is positioned onto the front transport unit (3) and is fixed via a plurality of connecting means (309) and guide pins (310) of a front supporting unit (300) of the transport unit (3);
or **in that**
the machine frame (MT) and the generator frame (GT) and/or the nacelle cover (5) are positioned as a composite unit onto the rear transport unit (2) and front transport unit (3) provided and are fixed by closure plates (208) of the rear supporting unit (200) of the transport unit (2) and via a plurality of connecting means (309) and guide pins (310) of the front supporting unit (300) of the transport unit (3).

7. Method according to Claim 5 or 6, **characterized in that** the transport units (2, 3) are connected to the generator frame (GT) and the machine frame (MT) through the nacelle cover (5).

## Revendications

1. Système de transport (1) pour une nacelle d'une éolienne, la nacelle comprenant un support de générateur (GT) et un support de machine (MT) et/ou un habillage de nacelle (5), et le système de transport (1) comprenant au moins deux unités de transport (2, 3) qui ne sont pas reliées l'une à l'autre mais constituent chacune une unité,
une unité de transport arrière (2) pouvant être reliée au support de générateur (GT),
et une unité de transport avant (3) pouvant être reliée au support de machine (MT),
**caractérisé en ce que** l'unité de transport arrière (2) comprend un profilé creux arrière (4) doté de deux unités d'appui arrière (200) identiques mais inversées latéralement, disposées solidement mais de manière amovible sur le profilé creux (4), qui peuvent être reliées au support de générateur (GT), et l'unité de transport avant (3) comprend un profilé creux avant (4) doté de deux unités d'appui avant (300) identiques mais inversées latéralement, disposées solidement mais de manière amovible sur le profilé creux (4), qui peuvent être reliées au support de machine (MT).

2. Système de transport (1) selon la revendication 1,
**caractérisé en ce que** l'unité de transport arrière (2) et l'unité de transport avant (3) présentent des broches de guidage (210, 310) qui correspondent à des ouvertures/alésages dans le support de générateur (GT) et dans le support de machine (MT).

3. Système de transport (1) selon la revendication 1 ou 2, **caractérisé en ce que** chaque unité d'appui arrière (200) se compose essentiellement d'un pied de transport (201) et d'un élément d'appui de transport arrière (206), une partie de base (202) du pied de transport (201), recevant le profilé creux (4), étant ou pouvant être fixée de manière amovible sur le profilé creux (4) à l'aide de moyens de raccordement, et **en ce que** chaque élément d'appui de transport arrière (206) est d'une part relié à la partie de base (202) du pied de transport (201), et d'autre part, une tôle terminale (208) est fixée de manière amovible à son extrémité supérieure (214) .

4. Système de transport (1) selon la revendication 1 ou 2, **caractérisé en ce que** chaque unité d'appui avant (300) se compose essentiellement d'un pied de transport (301) et d'un élément d'appui de transport avant (306), une partie de base (302) du pied de transport (301), recevant le profilé creux (4), étant ou pouvant être fixée de manière amovible sur le profilé creux (4) à l'aide de moyens de raccordement, et **en ce que** chaque élément d'appui de transport avant (306) est relié d'une part à la partie de base (302) du pied de transport (301), et présente d'autre part à son extrémité supérieure (307) des alésages (308) qui servent à fixer le support de machine (MT) à l'aide de moyens de raccordement (309), une broche de guidage (310) étant disposée au centre sur la partie de base (302).

5. Procédé de transport d'une nacelle d'une éolienne qui comprend un support de générateur (GT) et un support de machine (MT) et/ou un habillage de nacelle (5), en utilisant un système de transport (1) selon les revendications 1 à 4, **caractérisé en ce que**
le support de générateur (GT) sera ou est positionné sur une unité de transport arrière (2) du système de transport (1) et sera ou est relié à celle-ci, des ouvertures sur la face inférieure du support de générateur (GT) correspondant à l'unité de transport (2), et
le support de machine (MT) sera ou est positionné sur une unité de transport avant (3) du système de transport (1) et sera ou est relié à celle-ci, des alésages sur la face inférieure du support de machine (MT) correspondant à l'unité de transport (3), et
**en ce que** la pose du support de machine (MT) et du support de générateur (GT) est effectuée séparément ou sous la forme d'une unité composée du support de générateur (GT) et du support de machine (MT) et/ou de l'habillage de nacelle (5),
le système de transport (1) et la nacelle restant reliés de la production jusqu'au chantier.

6. Procédé selon la revendication 5, **caractérisé en ce que**
- le système de transport (1), comprenant une unité de transport arrière (2) et une unité de transport avant (3), sera ou est prévu ;
- le support de générateur (GT) est positionné sur l'unité de transport arrière (2) par l'intermédiaire de plusieurs broches de guidage (210) et est fixé par des tôles terminales (208) d'une unité d'appui arrière (200) de l'unité de transport (2) ;
- le support de machine (MT) est positionné sur l'unité de transport avant (3) et est fixé par l'intermédiaire de plusieurs moyens de raccordement (309) et broches de guidage (310) d'une unité d'appui avant (300) de l'unité de transport (3),
ou **en ce que** le support de machine (MT) et le support de générateur (GT) et/ou l'habillage de nacelle (5) sont positionnés sous la forme d'une unité assemblée sur l'unité de transport arrière (2) et l'unité de transport avant (3) prévues, et sont fixés par des tôles terminales (208) de l'unité d'appui arrière (200) de l'unité de transport (2) et par l'intermédiaire de plusieurs moyens de raccordement (309) et broches de guidage (310) de l'unité d'appui avant (300) de l'unité de transport (3).

7. Procédé selon la revendication 5 ou 6, **caractérisé en ce que** les unités de transport (2, 3) sont reliées au support de générateur (GT) et au support de machine (MT) à travers l'habillage de nacelle (5).
